# FASCICULE DE BREVET EUROPEEN

(11) **EP 0 488 919 B1**
(45) Date de publication et mention de la délivrance du brevet: **11.10.1995**
(21) Numéro de dépôt: 91440099.9
(22) Date de dépôt: 21.11.1991
(51) Int. Cl.: B65G 17/06, B30B 5/06, F16C 29/06

(54) **Dispositif à ruban métallique articulé, notamment pour le déplacement de charges lourdes**
Vorrichtung mit gelenkartigem Metallband, insbesondere zum Verschieben von schweren Lasten
Device with articulated metal band, in particular for shifting heavy loads

(30) Priorité: 28.11.1990 FR 9015141
(43) Date de publication de la demande: 03.06.1992
(73) Titulaire: Burger, Raymond, F-68160 Sainte-Marie-Aux-Mines (FR)
(72) Inventeur: Burger, Raymond, F-68160 Sainte-Marie-Aux-Mines (FR)
(74) Mandataire: Nuss, Pierre

(56) Documents cités:
- EP-A- 0 073 730
- WO-A-87/04139
- DE-A- 2 636 604
- DE-C- 823 088
- GB-A- 864 983

## Description

La présente invention concerne un dispositif à ruban métallique articulé, notamment, mais non exclusivement, pour le déplacement de charges très lourdes.

Par FR-A-2 512 135 on connaît une chaîne de roulement constituant un moyen pour le déplacement sous forte pression d'une surface mobile par rapport à une surface fixe.

Cette surface mobile est constituée dans de nombreuses applications par un ruban sans fin entourant une ou plusieurs chaînes de roulement tractées par un arbre moteur au moins, muni de pignons venant s'engrener dans ces chaînes. Ce ruban sans fin constitué généralement par des plaques rectangulaires et de même épaisseur en acier, articulées entre elles, est disposé librement autour des chaînes de roulement. Par conséquent, aucun lien mécanique positif entre le ruban et les chaînes de roulement n'est réalisé, le ruban n'étant entraîné de ce fait que lorsqu'il est suffisamment chargé et ne permettant absolument pas son déplacement à l'encontre de forces longitudinales opposées. En outre, aucun guidage, ni maintien spécifique du ruban articulé n'est prévu.

On connaît, par ailleurs, par FR-A-2 592 695 un dispositif selon le préambale de la revendication 1 comportant une chaîne roulement à crémaillère permettant d'assurer un lien mécanique positif entre le ruban et la chaîne de roulement correspondante.

Néanmoins, la solution proposée dans ce document présente différents inconvénients, notamment la nécessité d'utiliser des chaînes de roulement hors standard coûteuses et d'entraîner de nombreuses opérations d'usinage de grande précision. De plus, la chaîne de roulement proposée mangue de fiabilité et est sujettte à une usure importante en fonctionnement.

En outre, dans ces dispositifs connus, la chaîne de roulement et le ruban sont supportés par des arbres différents entraînant une structure relativement complexe.

Le problème posé à la présente invention est donc de concevoir un dispositif à ruban métallique articulé présentant une structure simple, réalisée au moyen de pièces et d'éléments standard, ne nécessitant aucun usinage de précision et dont l'encombrement total est faible.

L'invention a également pour but de permettre de réaliser les fonctions suivantes dans un dispositif à ruban métallique articulé du type précité :
- assemblage articulé des plaques constituant le ruban métallique entre elles ;
- translation du ruban lorsque celui-ci n'est pas chargé;
- répartition des efforts de traction et de pression exercés sur le ruban et sur les chaînes de roulement ;
- maintien du ruban perpendiculairement à sa surface ;
- guidage du ruban sous des charges faibles, ainsi que sous des charges élevées.

Enfin, l'invention a pour but de concevoir un dispositif à ruban métallique articulé présentant une très faible usure en fonctionnement, ainsi qu'une très grande fiabilité d'utilisation.

A cet effet, l'invention a pour objet un dispositif à ruban métallique articulé, notamment pour le déplacement de charges lourdes, principalement constitué d'un ruban sans fin entourant une ou plusieurs chaînes de roulement comportant des galets et circulant autour d'un bâti, ledit ruban étant formé de plaques métalliques articulées, caractérisé en ce qu'à chaque bord latéral du ruban est disposée une chaîne de manutention, chacune des plaques métalliques étant reliée à au moins un des maillons de chaque chaîne de manutention, et en ce que les pignons engrenant la ou les chaînes de roulement sont disposés, à chaque extrémité du dispositif, entre les pignons engrenant les chaînes de manutention et sur le même arbre que ces derniers, le rapport d'entraînement entre les deux types de pignons étant tel que la vitesse linéaire du ruban métallique sans fin est égale au double de la vitesse linéaire des chaînes de roulement.

L'invention sera mieux comprise, grâce à la description ci-après, gui se rapporte à un mode de réalisation préféré, donné à titre d'exemple non limitatif, et expliqué avec référence aux dessins schématiques annexés, dans lesquels :
la figure 1 est une vue partielle en élévation latérale et en coupe représentant une moitié d'un dispositif conforme à l'invention ;
la figure 2 est une vue partielle en coupe suivant A-A′ du dispositif représenté à la figure 1 ;
la figure 3 est une vue de détail et en coupe de l'extrémité d'une plaque métallique faisant partie du dispositif représenté à la figure 1, selon une variante de réalisation de l'invention.

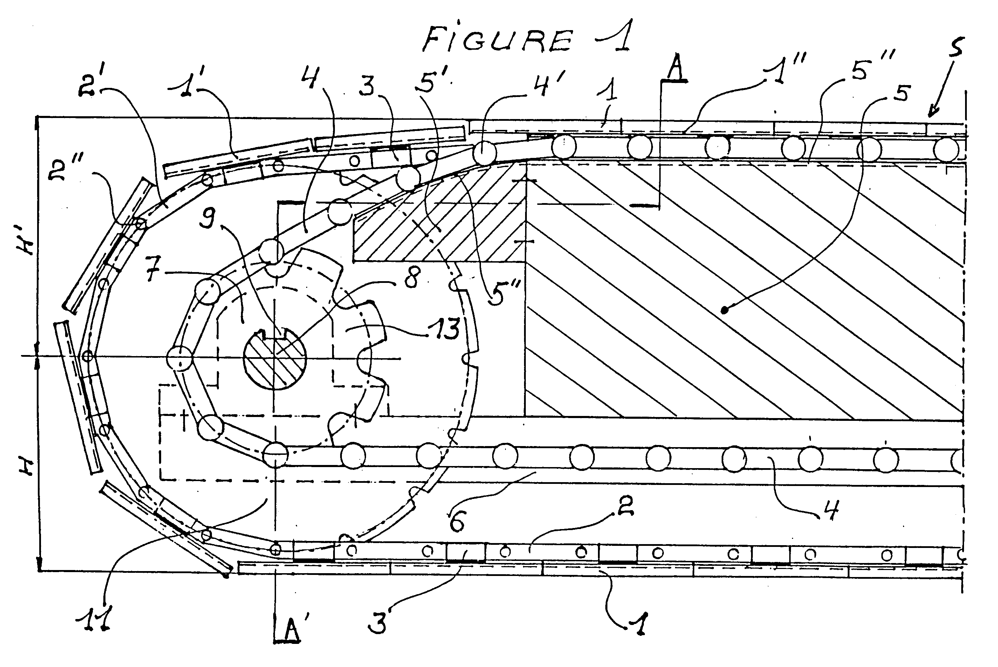

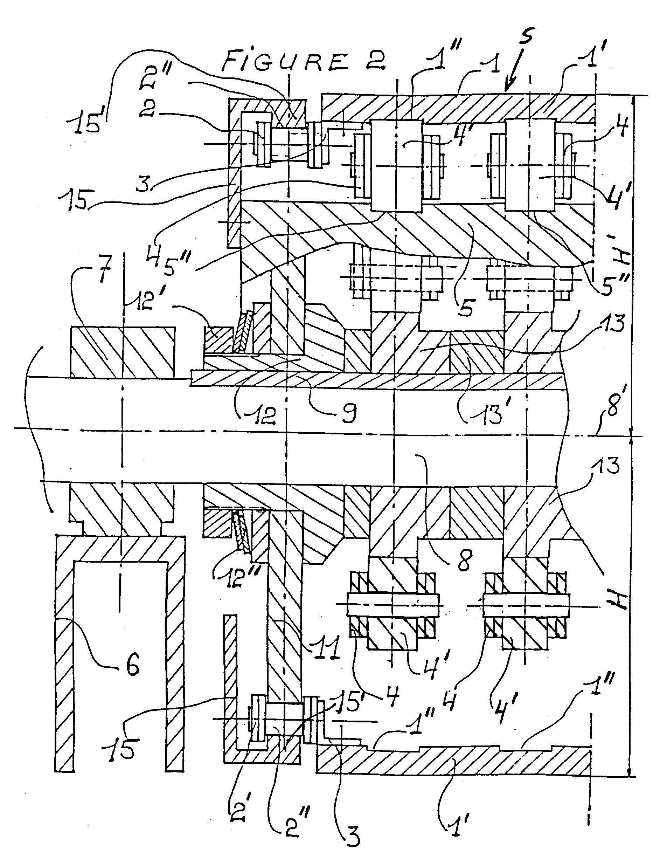

Conformément à l'invention et comme le montrent plus particulièrement, à titre d'exemple, les figures 1 et 2 des dessins annexés, le dispositif à ruban métallique 1 articulé est caractérisé en ce qu'à chaque bord latéral du ruban 1 est disposée une chaîne de manutention 2, chacune des plaques métalliques 1′ étant reliée à au moins un des maillons 2′ de chaque chaîne de manutention 2, et en ce que les pignons 13 engrenant la ou les chaînes de roulement 4 sont disposés, à chaque extrémité du dispositif, entre les pignons 11 engrenant les chaînes de manutention 2 et sur le même arbre 8 que ces derniers, le rapport d'entraînement entre les deux types de pignons 11 et 13 étant tel que la vitesse linéaire du ruban métallique 1 sans fin est égale au double de la vitesse linéaire des chaînes de roulement 4.

Afin d'obtenir la constitution totale d'un dispositif conforme à l'invention, il suffit de reproduire par symétrie par rapport au trait interrompu mixte de coupe la moitié représentée sur la figure 1.

De même, la coupe transversale totale du dispositif selon A-A′ représenté à la figure 1 peut être déduite de la figure 2.

Comme le montre la figure 1 des dessins annexés, la largeur des plaques métalliques 1′ est égale au pas ou à un multiple du pas des chaînes de manutention 2.

Selon un mode de réalisation préféré de l'invention, les pignons 11 engrenant les chaînes de manutention 2 présentent un diamètre primitif et, lorsque les chaînes de manutention 2 et de roulement 4 sont du même type, également un nombre de dents double de ceux des pignons 13 engrenant les chaînes de roulement 4.

Cette disposition permet de figer physiquement le rapport de 2 à 1 entre la vitesse linéaire du ruban métallique 1 articulé et la vitesse linéaire des chaînes de roulement 4, ce quel que soit le diamètre des galets 4′ desdites chaînes de roulement 4.

Ainsi, il est possible de rendre nul le glissement entre les galets 4′ de la chaîne de roulement 4 et les plaques métalliques 1′ prenant appui sur ces derniers et donc de limiter considérablement l'usure desdits galets 4′.

Le type de chaînes de roulement 4 et, éventuellement, de chaînes de manutention 2 mis en oeuvre dans le cadre de l'invention est préférentiellement celui connu par la norme internationale "ISO 1977".

Conformément à une caractéristique de l'invention, également représentée aux figures 1 et 2 des dessins annexés, les pignons 11 engrenant les chaînes de manutention 2 et les pignons 13 engrenant les chaînes de roulement 4 sont clavetés sur l'un au moins des deux arbres 8, selon que l'un seulement ou que les deux arbres 8 sont moteurs.

Il est possible ainsi au moyen d'un unique dispositif d'entraînement du type moto-réducteur-variateur (non représenté), disposé à l'extrémité de l'unique arbre moteur 8 au moins, d'entraîner simultanément et de manière complémentaire les chaînes de roulement 4 et les chaînes de manutention 2, et de répartir, ainsi, les forces de traction en fonction du mode d'utilisation du dispositif conforme à l'invention.

En effet, lorsque le ruban métallique 1 est soumis à un effort longitudinal important opposé à sa direction de déplacement et de manière concomitante à une charge relativement faible, un renforcement des chaînes de manutention 2 pourra pallier au mangue d'entraînement dudit ruban 1 par les chaînes de roulement 4 et permettre de remédier aux défauts de perpendicularité des plaques 1′ pouvant survenir dans de telles conditions de mise en oeuvre.

Dans certaines applications du dispositif, notamment lorsque des efforts de translation très élevés sont requis par rapport aux efforts de pression, les chaînes de manutention 2 seront d'un type dont la résistance de rupture est plus élevée que celle des chaînes de roulement 4, les pignons 11 d'engrenement des chaînes de manutention 2 étant alors directement clavetés sur les arbres 8. Dans ces cas, les chaînes de manutention 2 pourront être choisies préférentiellement de type A dans la série incluse dans la norme internationale "ISO 1977", les chaînes de roulement 4 étant du type B de la même série.

Afin d'éviter une rupture des chaînes dans des conditions d'utilisation extrêmes, les pignons d'entraînement 11 engrenant les chaînes de manutention 2 sont solidaires de l'arbre 8 moteur correspondant par l'intermédiaire d'un limiteur de couple 12, avantageusement du type à friction réglable.

L'effort de traction maximum devant être appliqué à la chaîne de manutention 2 pourra être déterminé en agissant sur un écrou de réglage 12′ comprimant une ou plusieurs rondelles élastiques 12˝, avantageusement du type Belleville, prenant appui directement ou par l'intermédiaire d'une pièce supplémentaire sur les pignons 11 engrenant les chaînes de manutention 2 (figure 2), permettant de régler la force de solidarisation desdits pignons 11 avec l'arbre 8 moteur correspondant.

Les pignons 13 engrenant les chaînes de roulement 4 sont avantageusement disposés décalés en rotation les uns par rapport aux autres sur les arbres 8, de telle manière que les galets 4′ des chaînes de roulement 4 constituent des points d'appui en quinconce pour les plaques 1′ du ruban métallique 1 sur le bâti 5.

Chaque arbre 8 comporte ainsi plusieurs pignons 13 clavetés au moyen d'une clavette 9, fonction du nombre de chaînes de roulement 4 présentes, lesdits pignons 13 étant séparés par des entretoises 13′ et disposés entre les pignons 11 engrenant les chaînes de manutention 2. Les arbres 8 sont maintenus dans des paliers 7 correspondants disposés symétriquement de chaque côté latéral du dispositif et à chacune de ses extrémités, lesdits paliers 7 étant solidaires du bâti 5 au moyen de supports 6.

Comme le montre la figure 2 des dessins annexés, les plaques métalliques 1′ constituant le ruban métallique 1 articulé sont fixées aux maillons 2′ des chaînes de manutention 2 au moyen d'éléments 3 en forme de cornières, lesdites chaînes de manutention 2 comportant des galets 2˝ dont le diamètre est inférieur à la largeur de ses maillons 2′ et circulant sur des rails 15 de guidage et de maintien supérieur et inférieur au niveau de chemins de roulement 15′ correspondants.

Ainsi, le maintien du ruban métallique 1 dans une direction perpendiculaire au plan du dispositif conforme à l'invention est assuré, autant au niveau de la face supérieure dudit dispositif, comportant la surface mobile fonctionnelle S, qu'au niveau de sa face inférieure, où s'effectue la trajectoire de retour des chaînes de roulement 4 et du ruban métallique 1 articulé.

En fonctionnement, les galets 2˝ des chaînes de manutention 2 prennent appui sur les chemins de roulement 15′ des rails 15 supérieurs et inférieurs solidaires du bâti 5.

Or, le bâti 5, ainsi que les plaques métalliques 1′, au niveau de leurs faces inférieures tournées vers le bâti 5, comportent des rainures 1˝ et 5˝ de largeur sensiblement égale à la largeur des galets 4′ des chaînes de roulement 4, assurant le guidage du ruban métallique 1 articulé et des chaînes de roulement 4.

Par conséquent, les rails 15 supérieurs, par leur action sur les galets 2˝, maintiennent les galets 4′ des chaînes de roulement 4 prisonniers dans les rainures 1˝ et 5˝, respectivement des plaques métalliques 1′ et du bâti 5, assurant ainsi un guidage optimal du ruban métallique 1 et donc de la surface mobile, même en présence de forces de pression très élevées.

Les rails 15 inférieurs jouent un rôle de support, le brin de retour du ruban 1 venant prendre appui par son poids propre sur le chemin de roulement 15′.

Conformément à un mode de réalisation de l'invention, représenté notamment à la figure 1 des dessins annexés, la distance H′ entre l'axe 8′ des arbres 8 et la surface fonctionnelle mobile S formée par les plaques 1′ du ruban métallique 1 articulé est supérieure à la distance H constituée par le rayon des pignons 11 engrenant les chaînes de manutention 2 augmenté de l'épaisseur desdites plaques 1′, permettant ainsi de réaliser, en intégrant dans une même structure deux dispositifs conformes à l'invention, dont les surfaces mobiles fonctionnelles sont opposées, une presse continue pouvant fonctionner à des pressions très élevées.

Dans ces conditions, le bâti 5 comporte également, à chacune de ses extrémités, une rampe inclinée 5′, préférentiellement de forme convexe, infléchissant la trajectoire des chaînes de roulement 4 vers le pignon 13 correspondant.

Ces rampes inclinées 5′ présentent également des rainures 5˝ pour le guidage des galets 4' des chaînes de roulement 4, disposées dans le prolongement des rainures 5˝ du bâti 5.

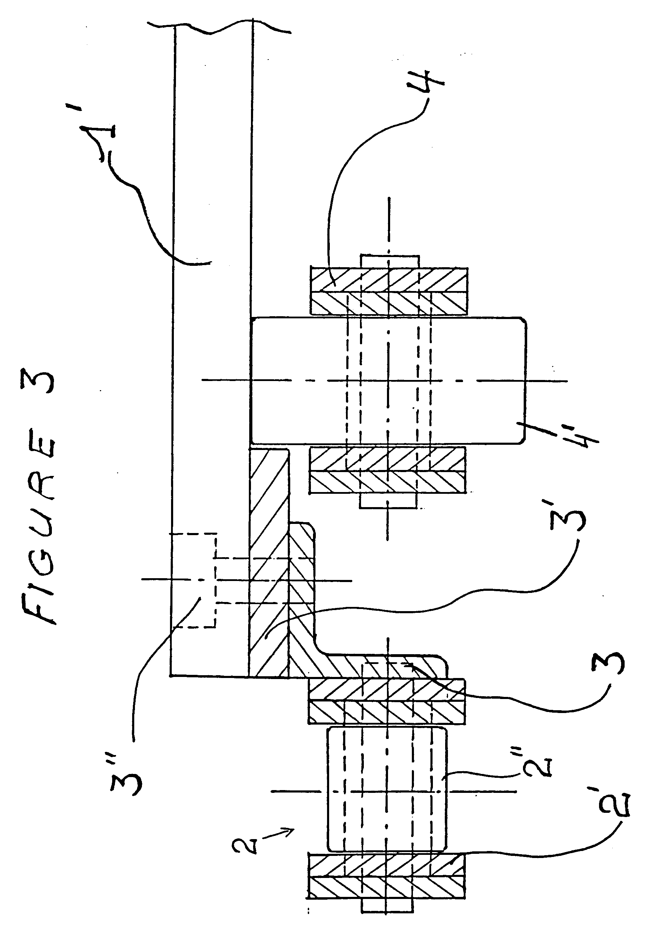

Selon une variante de réalisation de l'invention, représentée à la figure 3 des dessins annexés, chaque extrémité des plaques métalliques 1′ comporte une plaquette de guidage 3′ disposée entre lesdites plaques métalliques 1′ et les cornières 3 correspondantes, l'assemblage étant réalisé au moyen de boulons ou de vis 3˝ adaptés. Les bords internes de ces plaquettes de guidage 3′, présentant une longueur identique ou légèrement inférieure à la largeur des plaques métalliques 1′, constituent des butées latérales pour les galets 4′ extérieurs des chaînes de roulement 4.

Il est ainsi possible d'éviter un usinage onéreux des plaques métalliques, généralement composées d'un acier laminé très dur, en vue de réaliser les rainures 1˝ et de réduire sensiblement l'épaisseur nécessaire desdites plaques métalliques 1′.

Néanmoins, lorsque les pignons 11 engrenant les chaînes de manutention 2 sont tous clavetés sur les arbres 8 correspondants et que les pignons d'entraînement 11 fixés sur l'arbre moteur 8 sont montés fous, le guidage du ruban métallique 1 au moyen des rainures 1˝ ou des plaquettes 3′ n'est pas absolument nécessaire, la perpendicularité des plaques métalliques 1′ par rapport à la direction de déplacement étant assurée par les chaînes de manutention 2.

Grâce à l'invention, il est, par conséquent, possible de réaliser un dispositif à ruban métallique articulé permettant de remplir l'ensemble des fonctions indiquées précédemment, et ce sous la forme d'une structure simple et peu encombrante présentant une grande fiabilité du fait notamment d'une usure faible de ses pièces constitutives en fonctionnement, ainsi qu'un prix de revient peu élevé découlant de l'utilisation de nombreuses pièces standard et d'un nombre d'opérations d'usinage limité.

Le dispositif conforme à la présente invention peut notamment être mis en oeuvre dans le cadre de la compression en continu sous fortes pressions (fabrication de panneaux à l'aide de liants), du transfert de produits sous pressions élevées (étirage) ou encore du transport de véhicules lourds (excavatrice, pelleteuse).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection des revendications.

## Revendications

1. Dispositif à ruban métallique articulé, notamment pour le déplacement de charges lourdes, principalement constitué d'un ruban sans fin entourant une ou plusieurs chaînes de roulement comportant des galets et circulant autour d'un bâti, ledit ruban étant formé de plaques métalliques articulées, caractérisé en ce qu'à chaque bord latéral du ruban (1) est disposée une chaîne de manutention (2), chacune des plaques métalliques (1′) étant reliée à au moins un des maillons (2′) de chaque chaîne de manutention (2), et en ce que les pignons (13) engrenant la ou les chaînes de roulement (4) sont disposés, à chaque extrémité du dispositif, entre les pignons (11) engrenant les chaînes de manutention (2) et sur le même arbre (8) que ces derniers, le rapport d'entraînement entre les deux types de pignons (11, 13) étant tel que la vitesse linéaire du ruban métallique (1) sans fin est égale au double de la vitesse linéaire des chaînes de roulement (4).

2. Dispositif, selon la revendication 1, caractérisé en ce que la largeur des plaques métalliques (1′) est égale au pas ou à un multiple du pas des chaînes de manutention (2).

3. Dispositif, selon l'une quelconque des revendications 1 et 2, caractérisé en ce que les pignons (11) engrenant les chaînes de manutention (2) présentent un diamètre primitif et, lorsque les chaînes de manutention (2) et de roulement (4) sont du même type, également un nombre de dents double de ceux des pignons (13) engrenant les chaînes de roulement (4).

4. Dispositif, selon l'une quelconque des revendications 1 à 3, caractérisé en ce que les pignons (11) engrenant les chaînes de manutention (2) et les pignons (13) engrenant les chaînes de roulement (4) sont clavetés sur l'un au moins des deux arbres (8).

5. Dispositif, selon l'une quelconque des revendications 1 à 4, caractérisé en ce que les pignons d'entraînement (11) engrenant les chaînes de manutention (2) sont solidaires de l'arbre (8) moteur correspondant par l'intermédiaire d'un limiteur de couple (12), avantageusement du type à friction réglable.

6. Dispositif, selon l'une quelconque des revendications 1 à 5, caractérisé en ce que les pignons (13) engrenant les chaînes de roulement (4) sont disposés décalés en rotation les uns par rapport aux autres sur les arbres (8), de telle manière que les galets (4′) des chaînes de roulement (4) constituent des points d'appui en quinconce pour les plaques (1′) du ruban métallique (1) sur le bâti (5).

7. Dispositif, selon l'une quelconque des revendications 1 à 6, caractérisé en ce que les plaques métalliques (1′) sont fixées aux maillons (2′) des chaînes de manutention (2) au moyen d'éléments (3) en forme de cornières, lesdites chaînes de manutention (2) comportant des galets (2˝) dont le diamètre est inférieur à la largeur de ses maillons (2′) et circulant sur des rails (15) de guidage et de maintien supérieur et inférieur au niveau de chemins de roulement (15′) correspondants.

8. Dispositif, selon l'une quelconque des revendications 1 à 7, caractérisé en ce que la distance (H′) entre l'axe (8′) des arbres (8) et la surface fonctionnelle mobile (S) formée par les plaques (1′) du ruban métallique (1) articulé est supérieure à la distance (H) constituée par le rayon des pignons (11) engrenant les chaînes de manutention (2) augmenté de l'épaisseur desdites plaques (1′).

9. Dispositif, selon la revendication 8, caractérisé en ce que le bâti (5) comporte, à chacune de ses extrémités, une rampe inclinée (5′), préférentiellement de forme convexe, infléchissant la trajectoire des chaînes de roulement (4) vers le pignon (13) correspondant.

10. Dispositif, selon la revendication 9, caractérisé en ce que les plaques métalliques (1′), le bâti (5) et la rampe inclinée (5′) présentent des rainures (1˝ et 5˝) de largeur sensiblement égale à la largeur des galets (4′) des chaînes de roulement (4), assurant le guidage du ruban métallique (1) articulé et des chaînes de roulement (4).

11. Dispositif, selon l'une quelconque des revendications 7 ou 8, 9 incluant la revendication 7, caractérisé en ce que chaque extrémité des plaques métalliques (1′) comporte une plaquette de guidage (3′) disposée entre lesdites plaques métalliques (1′) et les cornières (3) correspondantes, l'assemblage étant réalisé au moyen de boulons ou de vis (3˝) adaptés.

## Claims

1. Device with an articulated metal belt, in particular for the displacement of heavy loads, mainly consisting of an endless belt surrounding one or more rolling chains comprising wheels and circulating round a frame, said belt being formed from articulated metal plates, characterised in that a handling chain (2) is arranged at each lateral edge of the belt (1), each of the metal plates (1') being connected to at least one of the links (2') of each handling chain (2), and in that the pinions (13) meshing with the rolling chain or chains (4) are arranged, at each end of the device, between the pinions (11) meshing with the handling chains (2) and on the same shaft (8) as them, the driving ratio between the two types of pinions (11, 13) being such that the linear velocity of the endless metal belt (1) is equal to twice the linear velocity of the rolling chains (4).

2. Device according to claim 1, characterised in that the width of the metal plates (1') is equal to the pitch or to a multiple of the pitch of the handling chains (2).

3. Device according to any one of claims 1 and 2, characterised in that the pinions (11) meshing with the handling chains (2) have a working diameter and, if the handling chains (2) and rolling chains (4) are of the same type, also have twice as many teeth as the pinions (13) meshing with the rolling chains (4).

4. Device according to any one of claims 1 to 3, characterised in that the pinions (11) meshing with the handling chains (2) and the pinions (13) meshing with the rolling chains (4) are wedged on at least one of the two shafts (8).

5. Device according to any one of claims 1 to 4, characterised in that the driving pinions (11) meshing with the handling chains (2) are connected to the corresponding driving shaft (8) by means of a torque limiter (12) advantageously of the adjustable friction type.

6. Device according to any one of claims 1 to 5, characterised in that the pinions (13) meshing with the rolling chains (4) are offset in rotation relative to one another on the shafts (8) such that the wheels (4') of the rolling chains (4) constitute staggered support points for the plates (1') of the metal belt (1) on the frame (5).

7. Device according to any one of claims 1 to 6, characterised in that the metal plates (1') are fixed to the links (2') of the handling chains (2) by means of elements (3) in the form of angle brackets, said handling chains (2) comprising wheels (2'') of which the diameter is smaller than the width of its links (2') and circulating on rails (15) for upper and lower guidance and maintenance at the level of the corresponding rolling paths (15').

8. Device according to any one of claims 1 to 7, characterised in that the distance (H') between the axis (8') of the shafts (8) and the moving functional surface (S) formed by the plates (1') of the articulated metal belt (1) is greater than the distance (H) formed by the radius of the pinions (11) meshing with the handling chains (2) increased by the thickness of said plates (1').

9. Device according to claim 8, characterised in that the frame (5) comprises, at each of its ends, an inclined ramp (5'), preferably of convex shape, causing the track of the rolling chains (4) to inflect toward the corresponding pinion (13).

10. Device according to claim 9, characterised in that the metal plates (1'), the frame (5) and the inclined ramp (5') have grooves (1'' and 5'') with a width which is substantially equal to the width of the wheels (4') of the rolling chains (4), ensuring that the articulated metal belt (1) and the rolling chains (4) are guided.

11. Device according to any one of claims 7 or 8, 9, including claim 7, characterised in that each end of the metal plates (1') comprises a guide strip (3') arranged between said metal plates (1') and the corresponding angle brackets (3), assembly being achieved by means of suitable bolts or screws (3'').

## Patentansprüche

1. Vorrichtung mit Metallgelenkband, insbesondere zum Verlagern schwerer Lasten, bestehend im wesentlichen aus einem endlosen Band, welches eine oder mehrere Rollenketten umgibt, die Rollen aufweisen und um einen Rahmen umlaufen, wobei das Band aus metallenen, gelenkig miteinander verbundenen Platten gebildet ist, dadurch **gekennzeichnet**, daß an jedem seitlichen Rand des Bandes (1) eine Förderkette (2) angeordnet ist, jede metallene Platte (1') mit mindestens einem Kettenglied (2') jeder Förderkette (2) verbunden ist und die Kettenräder (13), welche mit der oder den Rollenketten (4) zusammenwirken, an jedem Ende der Vorrichtung zwischen den Kettenrädern (11) welche mit den Förderketten (2) zusammenwirken, und auf der gleichen Welle (8) wie die Kettenräder (11) angeordnet sind, wobei die Antriebsbeziehung zwischen den beiden Typen von Kettenrädern (11, 13) derart ist, daß die translatorische Geschwindigkeit des endlosen Metallbandes (1) gleich der doppelten translatorischen Geschwindigkeit der Rollenketten (4) ist.

2. Vorrichtung nach Anspruch 1, dadurch **gekennzeichnet**, daß die Länge der Metallplatten (1') gleich der Teilung oder einem Vielfachen der Teilung der Förderketten (2) ist.

3. Vorrichtung nach einem der Ansprüche 1 oder 2, dadurch **gekennzeichnet**, daß die mit den Förderketten (2) zusammenwirkenden Kettenräder (11) doppelten Grundkreisdurchmesser und, bei gleichem Typ der Förderkette (2) und der Rollenkette (4), doppelte Zähnezahl wie die Kettenräder (13) aufweisen, welche mit den Rollenketten (4) zusammenwirken.

4. Vorrichtung nach einem der Ansprüche 1 bis 3, dadurch **gekennzeichnet**, daß die Kettenräder (11), welche mit den Förderketten (2) zusammenwirken, und die Kettenräder (13), welche mit den Rollenketten (4) zusammenwirken, auf eine von mindestens zwei Wellen (8) gemeinsam aufgekeilt sind.

5. Vorrichtung nach einem der Ansprüche 1 bis 4, dadurch **gekennzeichnet**, daß, die treibenden Kettenräder (11), welche mit den Förderketten (2) zusammenwirken, mit der Antriebswelle (8) über einen Drehmomentbegrenzer (12) vorzugsweise der Bauart mit regelbarem Schlupf, fest verbunden sind.

6. Vorrichtung nach einem der Ansprüche 1 bis 5, dadurch **gekennzeichnet**, daß die Kettenräder (13), welche mit den Rollenketten (4) zusammenwirken, in Drehrichtung versetzt zueinander auf den Wellen (8) angeordnet sind, derart, daß die Rollen (4') der Rollenketten (4) versetzte Abstützpunkte für die Platten (1') des Metallbandes (1) am Rahmen (5) bilden.

7. Vorrichtung nach einem der Ansprüche 1 bis 6, dadurch **gekennzeichnet**, daß die metallenen Platten (1') an den Kettengliedern (2') der Förderketten (2) mittels winkelförmigen Elementen (3) verbunden sind, wobei die Förderketten (2) Rollen (2'') aufweisen, deren Durchmesser kleiner als die Breite der Kettenglieder (2') ist und die auf Schienen (15) zur Führung und zur oberen und unteren Halterung auf dem Niveau der entsprechenden Laufbahnen (15') abwälzen.

8. Vorrichtung nach einem der Ansprüche 1 bis 7, dadurch **gekennzeichnet**, daß der Abstand (H') zwischen der Drehachse (8') der Wellen (8) und der beweglichen Arbeitsoberfläche (S), welche durch die Platten (1') des Metallgelenkbandes (1) gebildet ist, größer als der Abstand (H) ist, der aus der Summe des Radius des Kettenrades (11), welches mit den Förderketten (2) zusammenwirkt, und der Dicke der Platten (1') gebildet ist.

9. Vorrichtung nach Anspruch 8, dadurch **gekennzeichnet**, daß der Rahmen (5) an jedem Ende eine geneigte Rampe (5'), vorzugsweise konvexer Form, aufweist, welche die Bahn der Rollenkette (4) zum entsprechenden Kettenrad (13) hin abbiegt.

10. Vorrichtung nach Anspruch 9, dadurch **gekennzeichnet**, daß die Metallplatten (1'), der Rahmen (5) und die geneigte Rampe (5') Nuten (1'', 5'') etwa gleicher Breite wie die Breite der Rollen (4') der Rollenketten (4) aufweist, wobei die Nuten die Führung des Metallgelenkbandes (1) und der Rollenketten (4) gewährleisten.

11. Vorrichtung nach einem der Ansprüche 7 oder 8, 9 in Verbindung mit Anspruch 7, dadurch **gekennzeichnet**, daß jedes Ende der Metallplatten (1') ein Führungsplättchen (3') aufweist, das zwischen der betreffenden Metallplatte (1') und dem entsprechenden winkelförmigen Element (3) angeordnet ist, wobei eine Verbindung mittels Bolzen oder Paßschrauben (3'') hergestellt ist.
